# EUROPÄISCHE PATENTSCHRIFT

(11) **EP 1 949 827 B1**
(45) Veröffentlichungstag und Bekanntmachung des Hinweises auf die Patenterteilung: **06.01.2010**
(21) Anmeldenummer: 07001477.4
(22) Anmeldetag: 24.01.2007
(51) Int. Cl.: A47J 31/06, A47J 31/00

(54) **Maschine zur Zubereitung eines Heissgetränks**
Machine for preparing a hot drink
Machine destinée à la préparation d'une boisson chaude

(43) Veröffentlichungstag der Anmeldung: 30.07.2008
(73) Patentinhaber: WMF WÜRTTEMBERGISCHE METALLWARENFABRIK AG, 73309 Geislingen/Steige (DE)
(72) Erfinder: Boerner, Cornelius, 73329 Kuchen (DE); Startz, Armin, 89197 Weidenstetten (DE); Bockwoldt, Peter, 73095 Albertshausen (DE)
(74) Vertreter: Grünecker, Kinkeldey, Stockmair & Schwanhäusser Anwaltssozietät

(56) Entgegenhaltungen:
- WO-A-00/45686
- WO-A-2006/127113
- US-A- 6 062 127
- US-A1- 2005 034 605

## Beschreibung

Die Erfindung betrifft eine Maschine zur Zubereitung eines Heißgetränks gemäß dem Oberbegriff des Anspruchs 1, sowie ein Ein-Tassen-System zum Zubereiten einer Tasse Heißgetränk mit einer solchen Maschine sowie mit einer entsprechenden Normtasse.

Aus der WO 2006/127113 A1 ist bereits eine solche Maschine bekannt. Diese Druckschrift zeigt eine Maschine zur Zubereitung eines Heißgetränks mit einem Wassertank, einer Brühkammer, die gebildet wird, indem ein "Shower head" und ein "Pot carrier" zusammengesetzt werden. Die Brühkammer ist nicht komplett entnehmbar, da nur die Schublade zum Wechseln der Pads ein- und ausgeschoben wird. Ein Fixieren des "Shower heads" und des "Pot carriers" erfolgt durch Betätigung eines Schiebers. Der "shower head" ist über Federn höhenverstellbar, so dass entweder ein Pad oder mehrere Pads aufgenommen werden können. Es handelt sich hier nicht um ein Ein-Tassen-System, sondern um ein System, dass auch mehrere Tassen Kaffee bereiten kann. Die Ansteuerung der Heizung erfolgt in Abhängigkeit der Wassermenge. Der Tank kann ein Wasservolumen aufnehmen, das größer ist, als das Wasservolumen für eine Tasse.

Es gibt zahlreiche auf dem Markt befindliche Kaffee-/Pad-Maschinen in unterschiedlicher Ausführung. Die auf dem Markt befindlichen Kaffee-/Pad-Maschinen haben einen Wassertank, der mehrere Tassen Wasser aufnehmen kann. Dieses Wasser steht oftmals mehrere Tage im Tank und kann dadurch verunreinigt werden, bzw. verkeimen. Die bekannten Geräte haben oftmals zwei verschiedene Brühwassermengen zur Auswahl. Die entsprechende Menge wird z. B. jeweils über eine Taste oder ein Drehpotentiometer zur Einstellung der Menge und einer separaten Produkttaste zum Start der Brühung angefordert. Das Heizsystem ist von seiner Heizleistung so ausgelegt, dass auch die größere Menge in guter Qualität gebrüht werden kann, obwohl oftmals nur eine Tasse gebrüht wird. Beim Aufheizen des Systems muss damit das gesamte System auf Temperatur gebracht werden, auch wenn nur eine einzelne Tasse gebrüht werden soll. Geräte mit Boilersystemen oder Thermoblockheizungen werden in eingeschaltetem Zustand der Maschine auf Temperatur gehalten, bis das Gerät vom Kunden abgeschaltet wird bzw. eine automatische Abschaltung nach einer gewissen Zeit erfolgt. Damit sollen lange Aufheizzeiten für ein Folgeprodukt, die für das große Heizsystem benötigt würden, kompensiert werden. Hierbei wird sehr viel Energie verbraucht.

Weiter werden die bekannten Kaffee-/Pad-Maschinen über eine Tastenbetätigung in Betrieb genommen. Zur Produktauswahl ist eine zusätzliche Taste notwendig, dabei wird entweder das Produkt ausgegeben, solange die Taste betätigt wird, oder das Produkt ausgegeben, bis die Taste nach erstem Tastendruck erneut betätigt wird. Es ist auch möglich, dass das Produkt in einer bestimmten Menge / Zeit ausgegeben wird, nachdem die Taste erstmalig betätigt wird. Zum Ausschalten des Geräts muss erneut die Ein-/Ausschalttaste betätigt werden bzw. das Gerät schaltet sich nach einer gewissen Stand-by-Zeit selbständig ab.

Die bekannten Maschinen zur Zubereitung von Heißgetränken weisen also aufgrund ihrer Tankgröße relativ große Abmessungen auf und benötigen dadurch, dass unterschiedliche Brühwassermengen zur Verfügung gestellt werden auch ein Heizsystem mit großer Heizleistung, was teuer ist und darüber hinaus einen hohen Energieverbrauch mit sich bringt. Weiter befinden sich die auf dem Markt befindlichen Systeme häufig eine lange Zeit im Stand-by-Betrieb und verbrauchen auch so eine hohe Energie. Die Bedienung der bekannten Maschinen ist oftmals auch kompliziert.

Hiervon ausgehend liegt der vorliegenden Erfindung die Aufgabe zugrunde, eine Maschine zur Zubereitung eines Heißgetränkes bereit zu stellen, die eine minimale Abmessung aufweisen kann, die nicht zum Verkeimen neigt und die darüber hinaus einfach und auf kostengünstige Art und Weise betrieben werden kann.

Erfindungsgemäß wird diese Aufgabe durch die Merkmale des Anspruchs 1 sowie durch ein System gemäß Anspruch 8 gelöst.

Erfindungsgemäß ist vorgesehen, den Bereich zur Aufnahme der Tasse als eine Kammer auszubilden, die zur Vorderseite des Geräts geöffnet ist. Somit kann eine genau zur Maschine passende Tasse in die Kammer eingeschoben werden. Die Ausbildung des Bereichs zur Aufnahme der Tasse als nach vorne geöffnete Kammer spart wiederum Platz.

Die Maschine weist eine komplett entnehmbare Brühkammer auf. Somit ist kein hoher technischer Aufwand für den Verschlussmechanismus der Maschine notwendig. Die Brühkammer kann somit komplett vom Gerät mit einem Handgriff getrennt werden.

Erfindungsgemäß befindet sich dabei die komplett entnehmbare Brühkammer in der Kammer, in der auch die Tasse aufgenommen wird. Somit ist die zu entnehmende Brühkammer leicht zugänglich.

Gemäß der Erfindung ist die Größe bzw. das Fassungsvermögen des Wassertanks somit derart ausgelegt, dass die Wassermenge für nur eine Tasse Heißgetränk ausreicht, so dass der Wassertank am Ende der Brühung einer Tasse leer ist. Somit können Verunreinigungen durch lange Wasseraufbewahrung im Tank verhindert werden. Da die Tankgröße klein ist, kann auch die Gesamtgröße der Maschine erheblich reduziert werden.

Die erfindungsgemäße Maschine weist ein Heizsystem auf, das das Wasser aus dem Tank erhitzt, wobei das Wasser im Heizsystem also z.B Boilersystem erhitzt werden kann. Aus dem Tank kann auch während der Brühung Wasser in das Boilersystem nachgespeist werden. Die Steuereinheit ist so ausgelegt , dass dem Heizsystem eine Energiemenge zugeführt wird, die für die Wassermenge für nur eine Tasse Heißgetränk benötigt wird. Das bedeutet, dass die Maschine vorteilhafter Weise so gesteuert werden kann, dass die gesamte Wassermenge aus dem Tank gebrüht wird, so dass es zu keinem Restwasser im Wassertank kommt. Vorteilhafter Weise besitzt also die erfindungsgemäße Maschine nur eine Brühmenge auf die das Heizsystem ausgelegt werden muss. Damit kann im Gegensatz zu herkömmlichen Geräten das Brühwasser energieeffizienter für eine Tasse bereit gestellt werden. Durch das kleinere Heizsystem ist die Maschine schnell auf Betriebstemperatur auch für Folgetassen. Da hier das Heizsystem sehr klein ausgelegt ist, können Platz-, Herstellungskosten und darüber hinaus auch Betriebskosten gespart werden.

Vorteilhafter Weise weist die Maschine nur eine Taste auf, wobei nach einmaligem Tastendruck die Maschine angeschaltet und dem Heizsystem die bestimmte Energiemenge zugeführt wird und der Brühvorgang durchgeführt wird, wonach die Maschine automatisch abschaltet. Damit wird nicht, wie bei anderen Geräten Energie für den aufgeheizten Stand-by-Betrieb verschwendet.

In weiterer vorteilhafter Ausgestaltung ist der Taste der Maschine eine Leuchtanzeige zugeordnet, welche die Betriebszustände anzeigt. Damit kann der Bediener beispielsweise schnell erkennen, ob die Taste bereits gedrückt worden ist und das Heizsystem, das Brühwasser aufheizt. Leuchtet die Leuchtanzeige nicht, so erkennt der Anwender schnell, dass die Maschine ausgeschaltet ist. In vorteilhafter Weise ist die Leuchtanzeige als Leuchtring um die Taste angeordnet.

Vorteilhafter Weise weist ein Längsschnitt durch die Kammer eine im wesentlichen zur Tasse komplementäre Form auf, so dass die Tasse platzsparend in der Kammer angeordnet werden kann. Wenn die Brühkammer in der Aufnahmekammer vorgesehen ist, verbleibt ein Hohlraum, dessen Längsschnitt ebenfalls eine im wesentlichen zur Tasse komplementäre Form aufweist.

Ein Ein-Tassen-System zum Zubereiten einer Tasse Heißgetränk weist eine Maschine sowie mindestens eine entsprechende Normtasse auf, die beispielsweise auch einen Henkel aufweisen kann. Dabei ist die Innenkontur der Kammer an die Außenkontur der Tasse angepasst. Insbesondere wenn diese Tasse also einen Henkel aufweist, ist die Innenfläche der Kammer derart ausgebildet, dass sie einen Bereich zur Aufnahme des Henkels aufweist. Somit kann die Größe des Bereichs zur Aufnahme der Tasse minimiert werden, wodurch wiederum die Maschinengröße minimiert werden kann.

Die vorliegende Erfindung wird nachfolgend unter Bezugnahme der Zeichnungen näher erläutert.

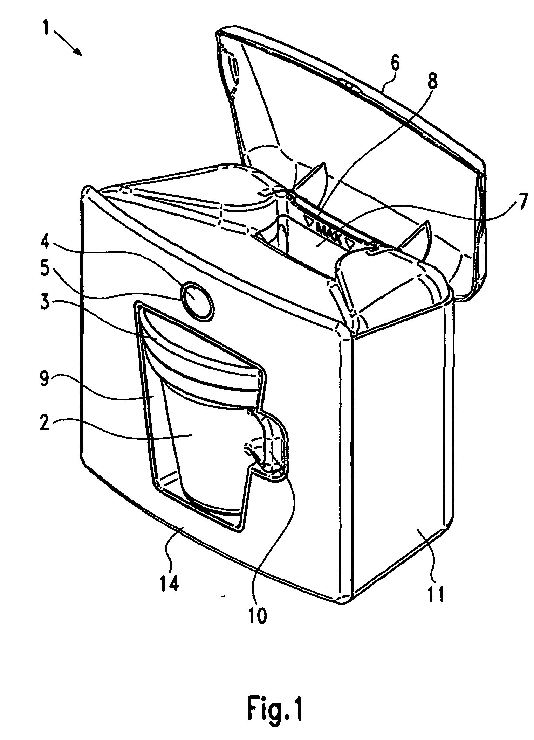

Dabei zeigt Figur 1 eine schematische, perspektivische Darstellung der erfindungsgemäßen Maschine.
Figur 2 eine schematische, perspektivische Darstellung der erfindungsgemäßen Maschine mit entnommener Brühkammer.
Figur 3 zeigt schematisch den Betrieb der erfindungsgemäßen Maschine.
Figur 4 zeigt schematisch einzelne Komponenten der Maschine.
Figur 5 zeigt schematisch eine Aufsicht auf die Kammer zur Aufnahme der Tasse.
Figur 6 zeigt schematisch einen Längsschnitt entlang der Linie I-I in Figur 5.
Figur 7 zeigt eine Explosionsdarstellung der wesentlichen Teile der erfindungsgemäßen Maschine.
Figur 8 zeigt eine schematische Seitenansicht der in Figur 1 gezeigten Maschine.

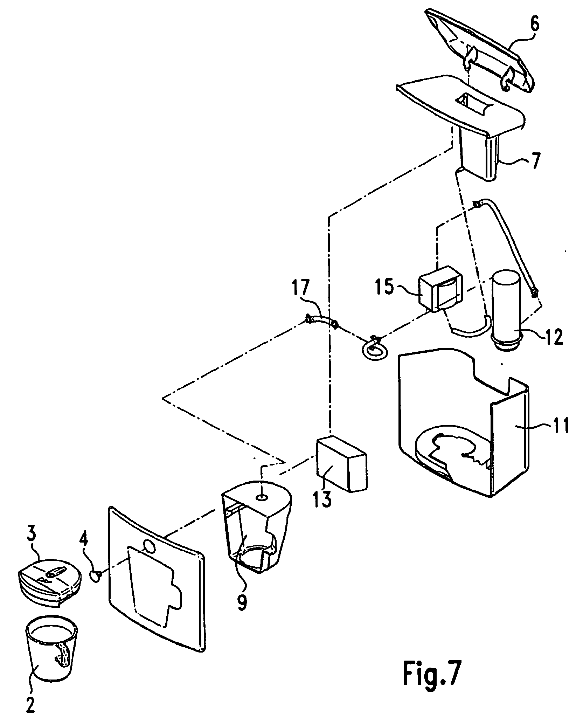

Figur 1 zeigt in perspektivischer Darstellung eine mögliche Ausführungsform einer Maschine 1 zur Zubereitung eines Heißgetränks. Figur 7 zeigt eine Explosionsdarstellung der wichtigsten Komponenten. Eine solche Maschine 1 kann beispielsweise Kaffe oder Tee etc. zubereiten. Die Maschine 1 weist dabei ein Gehäuse 11 auf, das an seiner Oberseite einen Deckel 6 aufweist, mit dem das Gehäuse 11 geöffnet und verschlossen werden kann. In dem Gehäuse 11 befindet sich ein Wassertank 7 mit einer Füllstandsmarkierung 8, bis zu welcher Wasser für das Heißgetränk eingefüllt werden kann. Bei der Maschine 1 handelt es sich um eine Ein-Tassen-Maschine. Die Größe bzw. das Fassungsvolumen des Wassertanks 7 ist derart ausgelegt, dass er nur die Wassermenge aufnehmen kann, die zur Erzeugung einer Tasse 2 an Heißgetränk benötigt wird. Das vorbestimmte Volumen liegt dabei z. B. in einem Bereich von 100 bis 200 ml, je nach Tassengröße. Durch das kleine Wassertankvolumen ist am Ende der Brühung der Tank leer. Somit können keine Verunreinigungen durch lange Wasseraufbewahrung im Tank auftreten.

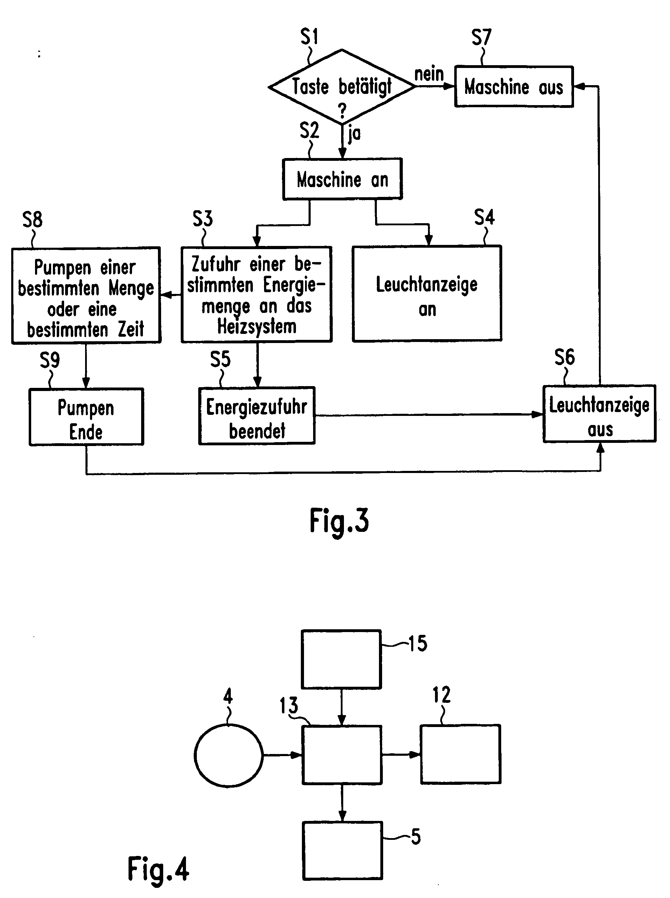

Weiter weist die Maschine 1 ein in Figur 7 dargestelltes Heizsystem 12 auf (siehe auch Figur 4), das das Wasser im Wassertank 7 erhitzt. Dabei können Boilersysteme oder Thermoblockheizungen verwendet werden. Das Heizsystem 12 ist so dimensioniert, dass es ausreicht, um eine Wassermenge für nur eine Tasse Heißgetränk zu erhitzen. Die Maschine 1 besitzt also nur eine Brühmenge, auf die die Größe und Leistung des Heizsystems 12 ausgelegt ist. Bei dem Erfindungsgemäßen Ein-Tassen-System wird also nur diejenige Menge an Energie zugeführt, die zum Bereitstellen einer Tasse Brühwasser benötigt wird. Damit kann im Gegensatz zu anderen Geräten Energie effizienter für das Brühwasser für eine Tasse bereitgestellt werden.

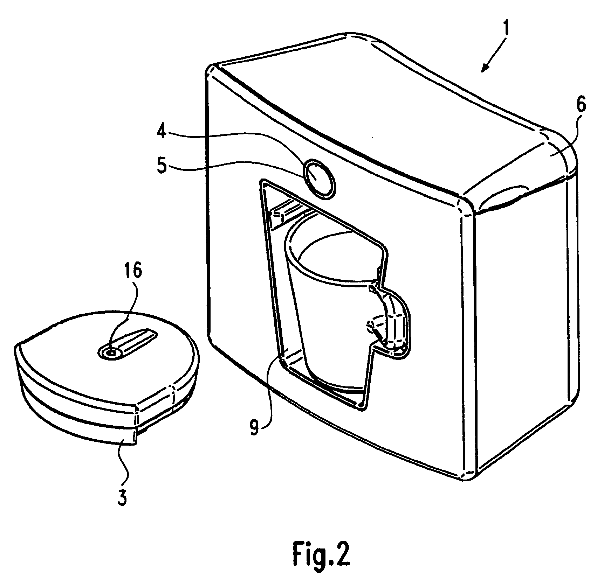

Weiter weist wie aus den Figuren 1 und 2 hervorgeht, die Maschine einen Bereich 9 auf, zur Aufnahme einer Tasse 2, in die das Heißgetränk abgefüllt wird. Der Bereich 9 ist hier als Kammer 9 ausgebildet, der zur Vorderseite 14 des Gehäuses 11 geöffnet ist. In der Kammer 9 ist hier eine vollständig entnehmbare Brühkammer 3 vorgesehen. Vollständig entnehmbar bedeutet, dass sowohl Oberteil als auch Unterteil der Brühkammer als Ganzes aus der Maschine entnommen werden können. In die Brühkammer können unterschiedliche Brühmedien, z. B. Kaffeepulver oder Kaffee-Pads bzw. Teepulver oder Kapseln gefüllt werden. Die verschlossene Brühkammer 3 kann dann in einen Einschubbereich der Maschine, hier in die Kammer 9, eingeschoben werden. Im oberen Bereich der Brühkammer 3 befindet sich ein Dichtelement 16, das die Brühkammer 3 in dichtender Art und Weise mit einer Zuleitung 17 für heißes Brühwasser, das mit hohem Druck aus dem Wassertank 7 mit Hilfe der Pumpe 15 gepumpt wird, in Verbindung steht. Am unteren Ende der Brühkammer 3 befindet sich ein Auslass (nicht dargestellt), durch den das Heißgetränk in die Tasse 2 fließen kann.

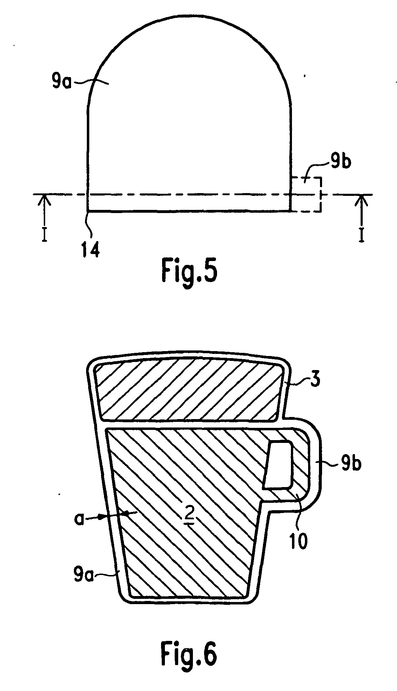

Die Größe der Kammer 9 ist derart ausgelegt, dass eine Tasse 2 darin Platz findet. In Figuren 5 und 6 ist die Form der Kammer 9 näher erläutert. Figur 5 zeigt eine Aufsicht auf die Kammer 9, die sich aus einem Hauptkammerteil 9a und einen Seitenbereich 9b zusammensetzt. Figur 6 ist ein Längsschnitt durch die Kammer 9. Im oberen Bereich der Kammer 9 befindet sich die eingeschobene Brühkammer 3. Bei eingesetzter Brühkammer 3 ergibt sich ein Hohlraum, dessen Längsschnitt entlang der Linie I-I in Figur 5, der parallel zur Vorderseite 14 des Gehäuses 11 verläuft, eine Form aufweist, die angepasst, d.h. im wesentlichen komplementär zur Form der darin stehenden Tasse 2 ist. Das bedeutet, dass die Innenseite der Kammer 9 an die Form der Tasse 2 angepasst ist. Zwischen Tasse 2 und Kammer 9 sollte ein Abstand vorgesehen sein, damit die Tasse einfach eingeschoben und entnommen werden kann. Damit auch Tassen mit Henkel verwendet werden können, weist die Kammer 9 auf zumindest einer Seite einen Bereich 9b auf, der sich von einer Seitenwand des Hauptbereichs 9a seitlich erstreckt, um beispielsweise einen Henkel 10 der Tasse 2 aufzunehmen. Diese Ausbildung ermöglicht eine sehr platzsparende Anordnung des Bereichs zur Aufnahme der Tasse 2, so dass insgesamt Platz gespart werden kann.

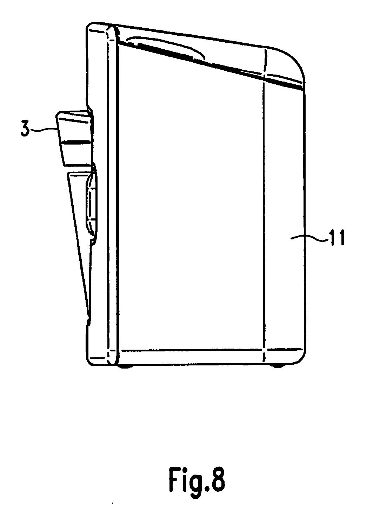

Wie aus Figur 8 hervorgeht, steht die eingesetzte Brühkammer 3 über die Kammer 9 und hier über die Vorderseite 14 vor. Dies ermöglicht, dass die Brühkammer einfach gegriffen werden kann.

Weiter weist die Maschine 1 nur eine Taste 4 für den kompletten Betrieb auf. Der Taste 4, die hier als Drucktaste ausgebildet ist, weist eine Leuchtanzeige 5, hier in Form eines Leuchtrings 5, auf.

Figur 4 zeigt schematisch den Betrieb der Maschine 1.

Die Taste bzw. der Schalter 4 ist mit der Steuereinheit 13 verbunden, die wiederum mit dem Heizsystem 12, der Pumpe 15 sowie mit der Leuchtanzeige 5 verbunden ist. Die Leuchtanzeige 5 zeigt dabei die wesentlichen Betriebszustände der Maschine an.

Die Funktionsweise der erfindungsgemäßen Maschine 1 wird in Zusammenhang mit Figur 3 verdeutlicht. Gemäß der vorliegenden Erfindung besitzt die Maschine 1 nur eine Taste. Wird die Taste 4 betätigt (S1) schaltet sich die Maschine an (S2), dabei wird die Maschine 1 von der Steuereinheit 13 so gesteuert, dass genau die Wassermenge gebrüht wird, die sich im Tank befindet. D. h., dass die bestimmte Energiemenge an das Heizsystem 12 geliefert wird, die nötig ist, um Brühwasser für eine Tasse 2 zu erzeugen (S3) und das gesamte Wasser aus dem Tank gepumpt wird. Das Wasser wird hier in dem Boilersystem 12 erhitzt. Aus dem Tank 7 kann auch während der Brühung Wasser in das Boilersystem nachgespeist werden. Die bestimmte Energiemenge kann vorab in Abhängigkeit des Tassenvolumens vorgegeben werden, d. h. konstant sein. Es ist jedoch auch möglich, über entsprechende Messungen (z. B. Temperatur oder Druck, etc.) das Ende des Aufheizvorgangs zu bestimmen. Gleichzeitig schaltet die Steuereinheit 13 auch die Leuchtanzeige an (S4) die aufleuchtet und somit anzeigt, dass die Maschine in Betrieb ist.

Ist eine ausreichende Energiemenge zugeführt, wird die Energiezufuhr beendet(S5) Das aufgeheizte Wasser kann dann oder während des Erhitzens über eine entsprechende Leitung über die Dichteinrichtung 16 in die Brühkammer 3 unter hohem Druck gedrückt werden. Es wird dazu eine bestimmte Menge oder eine bestimmte Zeit lang gepumpt (S8), wonach der Pumpvorgang beendet ist (S9). Die Schritte S3 und S8 können auch zumindest teilweise parallel ablaufen.

Eine bestimmte Produktmenge wird dann in die Tasse am unteren Ende der Brühkammer 3 ausgegeben.

Nach Beendigung der Energiezufuhr kann die Steuereinheit 13 die Leuchtanzeige sofort oder nach einer bestimmten Zeit ausschalten (S6). Die Maschine schaltet sich dann automatisch ab (S7). Die Maschine bleibt ausgeschaltet, solange die Taste 4 nicht betätigt wird.

Das Heizsystem wird auf nur einen Tastendruck aufgeheizt und abgeschaltet, wenn die zugeführte Energie für die festgelegte Brühmenge ausreichend ist. Damit wird, nicht wie bei bekannten Geräten, Energie für den aufgeheizten Stand-by-Betrieb verschwendet. Durch das kleine Boilersystem, das nur für eine Tasse Brühwasser ausgelegt ist, ist die Maschine schnell auf Betriebstemperatur auch für Folgetassen.

Ein Ein-Tassen-System zum Zubereiten einer Tasse Heißgetränk weist dabei vorteilhafter Weise die erfindungsgemäße Maschine 1 sowie mindestens eine passende Normtasse 2 auf, deren Volumen bekannt ist, wobei die Größe und Form der Kammer, wie zuvor beschrieben, an die Tasse 2 angepasst ist, und auch die Heizleistung des Heizsystems 12 und das Füllvolumen des Tanks 7 an das Tassenvolumen angepasst sind.

## Patentansprüche

1. Maschine (1) zur Zubereitung eines Heißgetränkes mit einem Wassertank (7), einer Brühkammer (3) sowie einen Bereich (9) zur Aufnahme einer Tasse (2),
**dadurch gekennzeichnet, dass**
das Fassungsvolumen des Wassertanks (7) derart ausgelegt ist, dass die Wassermenge für nur eine Tasse (2) Heißgetränk ausreicht, so dass der Wassertank (7) am Ende der Brühung leer ist,
der Bereich (9) zur Aufnahme der Tasse und Brühkammer als Kammer ausgebildet ist, die zur Vorderseite der Maschine (1) geöffnet ist,
die Brühkammer (3) in der Kammer (9) geschlossen entnehmbar angeordnet ist.

2. Maschine (1) nach Anspruch 1,
**dadurch gekennzeichnet, dass**
die Maschine (1) weiter ein Heizsystem (12) aufweist, dass das Wasser erhitzt, wobei eine Steuereinheit (13) so ausgelegt ist, dass dem Heizsystem (13) eine Energiemenge zugeführt wird, die für die Wassermenge für nur eine Tasse Heißgetränk benötigt wird.

3. Maschine (1) nach Anspruch 2,
**dadurch gekennzeichnet, dass**
die Maschine (1) eine Taste (4) aufweist, wobei nach Tastendruck die Maschine angeschaltet ist, dem Heizsystem (13) die bestimmte Energiemenge zugeführt wird, der Brühvorgang durchgeführt wird, wonach die Maschine (1) automatisch abschaltet.

4. Maschine (1) nach mindestens einem der Ansprüche 1 bis 3,
**dadurch gekennzeichnet, dass**
der Taste (4) eine Leuchtanzeige (5) zur Anzeige von Betriebszuständen zugeordnet ist.

5. Maschine (1) nach Anspruch 4,
**dadurch gekennzeichnet, dass**
die Leuchtanzeige (5) als Leuchtring um die Taste (4) angeordnet ist.

6. Maschine (1) nach Anspruch 1,
**dadurch gekennzeichnet, dass**
ein Längsschnitt durch die Kammer (9) eine im wesentlichen zur Tasse komplementäre Form aufweist.

7. Maschine (1) nach Anspruch 1,
**dadurch gekennzeichnet, dass**
die Kammer (9) bei eingesetzter Brühkammer (3) einen Hohlraum bildet, dessen Längsschnitt eine im wesentlichen zur Tasse (2) komplementäre Form aufweist.

8. Ein-Tassen-System zum Zubereiten einer Tasse Heißgetränk mit einer Maschine nach mindestens einem der Ansprüche 1 bis 7 sowie mindestens einer Normtasse (2).

9. Ein-Tassen-System nach Anspruch 8,
**dadurch gekennzeichnet, dass**
die Tasse einen Henkel (19) aufweist und die Kammer auf zumindest einer Seite der Kammer (9) einen sich lateral von der Kammerwand aus erstreckenden Bereich (9b) zur Aufnahme eines Henkels aufweist.

## Claims

1. Machine (1) for the preparation of a hot drink, comprising a water tank (7), a brewing chamber (3), and a region (9) for the accommodation of a cup (2),
**characterised in that**
the capacity of the water tank (7) is rated such that the amount of water is only sufficient for one cup (2) of hot drink, so that the water tank (7) is empty at the end of the brewing,
the region (9) for the accommodation of the cup and the brewing chamber is formed as a chamber which is open at the face side of the machine (1),
the brewing chamber (3) is arranged in the chamber (9) for being removed in a closed manner.

2. Machine (1) according to claim 1,
**characterised in that**
the machine (1) also has a heating system (12), which heats the water, wherein a control unit (13) is designed such that an amount of energy, which is required for the amount of water for only one cup of hot drink, is passed to the heating system (12).

3. Machine (1) according to claim 2,
**characterised in that**
the machine (1) has a button (4), wherein the machine is switched on when the button is pressed, the defined amount of energy is fed to the heating system (12), the brewing process is carried out and thereafter the machine (1) is automatically switched off.

4. Machine (1) according to at least one of the Claims 1 to 3,
**characterised in that**
an illuminated indicator (5) is assigned to the button (4) for indicating the operating states.

5. Machine (1) according to claim 4,
**characterised in that**
the illuminated indicator (5) is arranged as an illuminated ring around the button (4).

6. Machine (1) according to claim 1,
**characterised in that**
a longitudinal section through the chamber (9) has a shape essentially complementary to the cup.

7. Machine (1) according to claim 1,
**characterised in that**
the chamber (9), with the brewing chamber (3) inserted, forms a cavity, the longitudinal section of which has a shape essentially complementary to the cup (2).

8. Single-cup system for the preparation of a cup of hot drink, with a machine according to at least one of the Claims 1 to 7 and at least one standard cup (2).

9. Single-cup system according to claim 8,
**characterised in that**
the cup has a handle (19) and the chamber on at least one side of the chamber (9) has a region (9b) extending laterally from the chamber wall for the accommodation of a handle.

## Revendications

1. Machine (1) destinée à la préparation d'une boisson chaude comprenant un réservoir d'eau (7), une chambre à infuser (3) ainsi qu'une zone (9) destinée à recevoir une tasse (2),
**caractérisée en ce que**
la capacité du réservoir à eau (7) est étudiée pour que la quantité d'eau suffise à remplir une seule tasse (2) d'eau chaude, de sorte que le réservoir d'eau (7) soit vide à la fin de l'infusion,
la zone (9) destinée à recevoir la tasse et la chambre à infuser est conçue comme une chambre ouverte en direction de la face avant de la machine (1),
la chambre à infuser (3) est disposée dans la chambre (9) de manière à pouvoir être retirée fermée.

2. Machine (1) selon la revendication 1,
**caractérisée en ce que**
la machine (1) comprend en outre un système de chauffage (12) chauffant l'eau, une unité de commande (13) étant étudiée pour amener au système de chauffage (13) une quantité d'énergie nécessaire pour la quantité d'eau pour une seule tasse de boisson chaude.

3. Machine (1) selon la revendication 2,
**caractérisée en ce que**
la machine (1) comprend une touche (4), et une fois la touche pressée, la machine étant mise en marche, la quantité d'énergie déterminée étant amenée au système de chauffage (13), le processus d'infusion étant exécuté, après quoi la machine (1) est automatiquement éteinte.

4. Machine (1) selon au moins l'une des revendications 1 à 13,
**caractérisée en ce que**
un voyant lumineux (5) destiné à indiquer les états de marche est associé à la touche (4).

5. Machine (1) selon la revendication 4,
**caractérisée en ce que**
le voyant lumineux (5) est disposé en tant que bague lumineuse autour de la touche (4).

6. Machine (1) selon la revendication 1,
**caractérisée en ce que**
une coupe longitudinale à travers la chambre (9) comprend une forme sensiblement complémentaire de celle de la tasse.

7. Machine (1) selon la revendication 1,
**caractérisée en ce que**
la chambre (9), lorsque la chambre à infuser (3) est insérée, forme une cavité dont la coupe longitudinale présente une forme sensiblement complémentaire de celle de la tasse (2).

8. Système de tasse unique destiné à préparer une tasse de boisson chaude comprenant une machine selon au moins l'une des revendications 1 à 7 et au moins une tasse normale (2).

9. Système de tasse unique selon la revendication 8,
**caractérisé en ce que**
la tasse comprend une anse (19) et la chambre comprend sur **a**u moins une face de la chambre (9) une zone (9b) s'étendant latéralement depuis la paroi de la chambre et destinée à recevoir une anse.
